# FASCICULE DE BREVET EUROPEEN

(11) **EP 0 783 843 B1**
(45) Date de publication et mention de la délivrance du brevet: **14.11.2001**
(21) Numéro de dépôt: 96402733.8
(22) Date de dépôt: 13.12.1996
(51) Int. Cl.: A42B 3/22, A42B 3/04, G02B 27/01

(54) **Casque à dispositif de vision nocturne à sécurité et ergonomie optimisées**
Helm mit Nachtsichtvorrichtung und optimierter Sicherheit und Ergonomie
Helmet with night-vision device and optimized safety and ergonomics

(30) Priorité: 26.12.1995 FR 9515487
(43) Date de publication de la demande: 16.07.1997
(73) Titulaire: THALES AVIONICS S.A., 78141 Vélizy Villacoublay Cédex (FR)
(72) Inventeur: Cursolle, Jean-Pierre, Thomson-CSF, 94117 Arcueil Cedex (FR); François, Jean-Michel, Thomson-CSF, 94117 Arcueil Cedex (FR); Gerbe, Jean-Pierre, Thomson-CSF, 94117 Arcueil Cedex (FR); Lacroux, Patrick, Thomson-CSF, 94117 Arcueil Cedex (FR); Plantier, Denis, Thomson-CSF, 94117 Arcueil Cedex (FR)
(74) Mandataire: Chaverneff, Vladimir

(56) Documents cités:
- EP-A- 0 384 880
- EP-A- 0 395 570
- EP-A- 0 481 860
- EP-A- 0 657 111
- WO-A-95/28100
- FR-A- 2 070 298
- FR-A- 2 289 072
- FR-A- 2 340 020
- FR-A- 2 391 664
- GB-A- 974 901
- GB-A- 2 022 989
- US-A- 4 170 042
- US-A- 5 254 852

## Description

La présente invention se rapporte à un casque à dispositif de vision nocturne à sécurité et ergonomie optimisées.

Les casques de pilotes d'avions militaires, susceptibles d'effectuer des missions nocturnes comportent généralement un dispositif de vision nocturne à intensificateur électronique de lumière. Ce dispositif de vision nocturne était, au début, du type "jumelle" à encombrement relativement important, qui de ce fait a été remplacé par un type plus récent, le type "lunette". Ce dernier comporte une optique à miroirs assurant un pliage du trajet des rayons lumineux, rendant ainsi le dispositif peu encombrant et peu épais. Cette caractéristique présente en outre l'avantage de permettre de munir le casque d'une visière que le pilote rabat en cas d'éjection, afin de se protéger le visage, sans avoir à enlever le dispositif de vision nocturne. Un autre avantage est la faible masse de ce dispositif et le faible bras de levier présenté par la distance entre le centre de gravité de la lunette et l'axe de rotation de la tête du pilote, ce qui induit un couple supportable par le pilote lors de l'accélération d'éjection.

L'inconvénient de cette dernière solution réside dans le fait que la vision se fait toujours à travers la visière. En cas de mission uniquement nocturne, il suffit de munir le casque d'une visière claire, qui n'atténue que très peu les rayons lumineux (environ 5 %). Par contre, dans le cas d'une mission commerçant en période diurne ou crépusculaire, il faut munir le casque d'une visière teintée pour éviter l'éblouissement ou la gêne du pilote, et si cette mission se poursuit en période nocturne, une telle visière teintée atténue trop les rayons lumineux (atténuation d'environ 75 %).

Les dispositifs de vision nocturne sont équipés d'un combineur, qui est un dispositif optique permettant de superposer les images produites par le dispositif de vision nocturne à celles arrivant directement de l'extérieur de l'avion. Pour donner pleinement satisfaction à l'utilisateur, ces combineurs doivent être munis d'un dispositif de correction dioptrique adapté à la vision de l'usager, et leur atténuation de la lumière en réflexion et en transmission doit être optimisée.

Pour ce qui est de la correction dioptrique d'un dispositif de vision nocturne à deux voies (directe et intensifiée), le réglage dioptrique simple, tel qu'il existe dans des jumelles de vision nocturne, ne suffit pas, car la voie directe n'est pas corrigée. Le pilote perçoit alors deux images dont les plans sont à des distances différentes, ce qui provoque une gêne et une fatigue importantes, notamment lors d'une utilisation prolongée.

Du fait que les lunettes de vision nocturne comportent un combineur, si on veut diminuer leur encombrement sans diminuer leur champ optique, on ne peut les utiliser avec des lunettes de vue classiques. L'utilisation de lentilles de contact résout le problème de l'encombrement, mais on ne peut les porter de façon prolongée sur un avion d'armes.

En outre, dans le cas de missions exécutées dans des conditions de luminosité ambiante très différentes (missions commençant en plein jour ou au crépuscule et se prolongeant en pleine nuit), la différence entre la luminance de l'image intensifiée et celle du paysage vu à travers le combineur peut être gênante pour l'utilisateur, et un compromis, tributaire du rapport des coefficients de réflexion et de transmission du combineur, peut ne pas être approprié.

Un casque de vision nocturne, tel que celui utilisé par les pilotes d'avions de combat, comporte, entre autres, un intensificateur de lumière nécessitant une source d'alimentation électrique. Cette source est généralement constituée par des piles, dont l'autonomie est de quelques heures, dix heures au maximum. La durée d'une mission d'avion de combat est souvent inférieure à l'autonomie de ces piles, que l'on réutilise pour les missions suivantes, pour des raisons d'économie. Ces piles peuvent s'épuiser en cours de mission, et il est donc alors nécessaire de les changer en cours de mission.

Dans les casques connus, les piles sont disposées dans un boîtier encombrant, disposé généralement en porte-à-faux. Ces casques comportent une visière rabattable destinée à protéger le visage du pilote en cas d'éjection. Cette visière doit être relevée lors du changement des piles, ce qui ne facilite pas ce changement. De plus, en cas d'éjection, les piles avec leur boîtier -doivent être désolidarisées du casque, à cause de leur poids en porte-à-faux.

La présente invention a pour objet un casque à dispositif de vision nocturne qui soit ergonomique, confortable à utiliser, qui permette d'effectuer aussi bien des missions uniquement nocturnes que des missions commençant en période diurne ou crépusculaire et se prolongeant en période nocturne, sans dégradation sensible de la vision nocturne, qui permette à la fois une personnalisation facile pour être adapté à la vue de l'utilisateur, qui présente la meilleure luminosité possible aussi bien en vision diurne qu'en vision nocturne, et qui soit le mieux équilibré possible.

Le casque conforme à l'invention comporte une visière teintée rabattable et un combineur interchangeable. comme revendiqué dans la revendication 1.

Selon une caractéristique de l'invention la visière teintée rabattable coopère avec des moyens de blocage en position relevée et des moyens de verrouillage en position fermée, ainsi qu'avec des moyens de rappel en position fermée cette visière étant relevée en vision nocturne et étant rabattue manuellement en vision diurne et automatiquement en cas d'éjection du pilote.

Selon une caractéristique avantageuse de l'invention, le dispositif d'alimentation électrique de son dispositif de vision nocturne comporte un boîtier renfermant les piles et intégré au casque, de préférence à sa partie inférieure, dans le côté opposé au connecteur audiophonique.

La présente invention sera mieux comprise à la lecture de la description détaillée d'un mode de réalisation, pris à titre d'exemple non limitatif et illustré par le dessin annexé, sur lequel :
- la figure 1 est une vue en perspective éclatée d'un casque conforme à l'invention, montrant sa visière rabattable,
- la figure 2 est une vue d'un détail du casque de la figure 1, montrant le processus de verrouillage de sa visière en position fermée,
- la figure 3 est une vue en perspective éclatée du combineur du casque de la figure 1,
- les figures 4 et 5 sont des vues en perspective éclatée du combineur de la figure 3 montrant le montage de sa lentille d'adaptation dioptrique,
- les figures 6 et 7 sont respectivement une vue de face et une vue de côté d'un casque conforme à l'invention, montrant son dispositif d'alimentation électrique, et
- la figure 8 est une vue en perspective d'un boitier de piles pouvant être intégré au casque des figures 6 et 7.

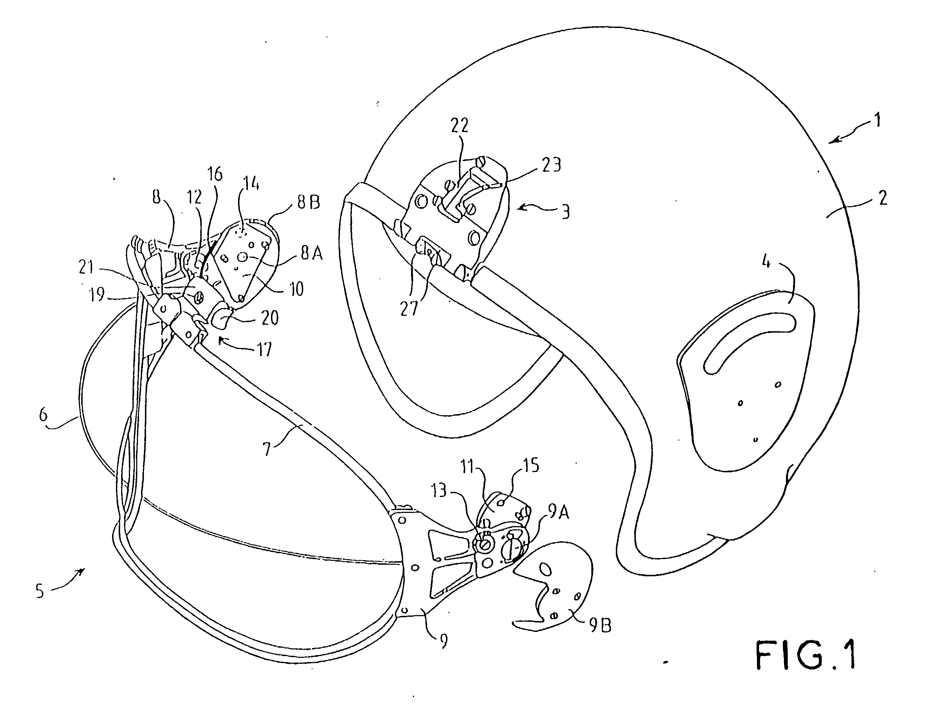

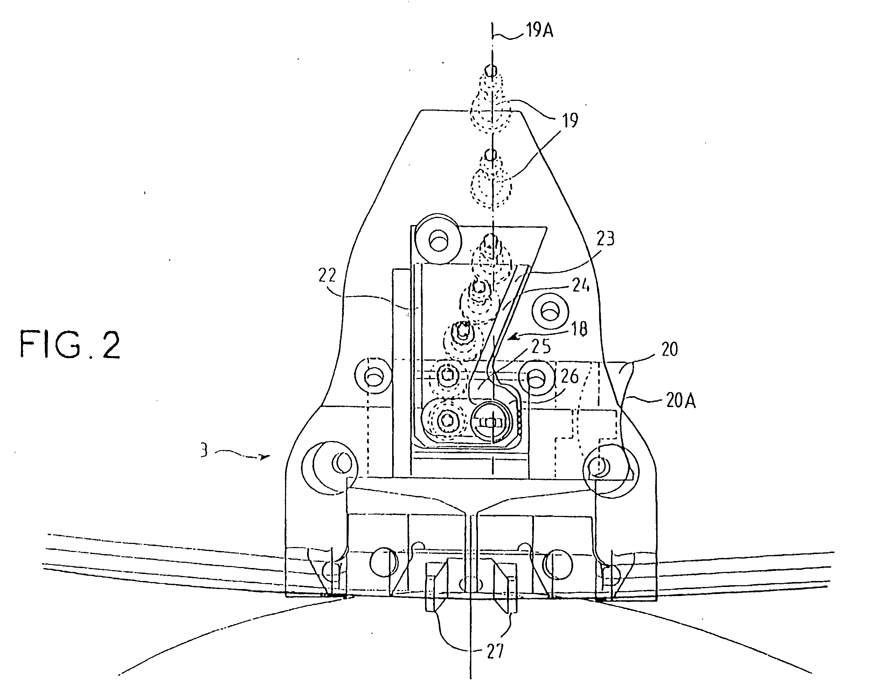

On n'a représenté sur les figures 1 et 2 que les parties du casque 1 nécessaires à la description de la visière du casque de l'invention. N'ont pas été représentés, en particulier, le dispositif de vision nocturne, ni la coque intérieure du casque, ni son combineur.

La coque externe 2 du casque 1 comporte, à sa partie supérieure, près de son bord antérieur, sur sa face externe, une pièce 3 de fixation de lunette de vision nocturne et de verrouillage de visière, et de chaque côté, sensiblement en face des oreilles de l'utilisateur, des supports d'articulation de la visière. Seul un de ces supports, référencé 4, est visible sur le dessin.

La visière 5 comporte, de façon habituelle, un verre de protection incurvé 6 maintenu par une monture 7. A ses extrémités latérales, la monture 7 est fixée à des étriers 8,9 permettant de la monter sur les supports 4 avec une rotation limitée à environ 90° et blocage aux extrémités de la course de rotation. Les axes de rotation relatifs à l'étrier 8 et à l'étrier 9 sont respectivement référencés 8A, 9A. Les étriers 8, 9 coopèrent avec des contre-plaques 10, 11 interposées entre eux et les supports 4, et fixées sur ces derniers. Les extrémités des étriers 8, 9 sont recouvertes extérieurement par des enjoliveurs 8B, 9B. On forme, dans les faces de chacune des contre-plaques 10, 11 tournées vers les étriers 8, 9, des logements hémisphériques 14, 15 dans lesquels vient se loger la bille d'un poussoir à bille 12, 13, fixé sur l'étrier 8, 9 respectivement, à l'extrémité supérieure de la course de rotation de la visière 5 (visière relevée). Bien entendu, le diamètre de ces logements hémisphériques est pratiquement égal à celui des billes des poussoirs 12, 13. Bien entendu également, les caractéristiques des ressorts des poussoirs 12, 13 appliquant les billes de ces poussoirs dans les logements 14 et 15 sont déterminées pour bloquer la visière 5 dans la position relevée, tout en permettant soit de la manipuler sans effort excessif, soit sa fermeture automatique, si elle est relevée, en cas d'éjection, de la façon décrite ci-dessous.

Autour des axes de rotation 8A, 9A de la visière, on dispose des ressorts, seul le ressort 16 relatif à l'axe 8A étant visible sur le dessin. Ces ressorts sont disposés de façon à solliciter la visière 5 en position fermée, sans toutefois pouvoir vaincre seuls la force de réaction due aux billes des poussoirs 12, 13 lorsque la visière est en position relevée. Cette force de réaction ne peut être vaincue que lorsque le pilote portant le casque subit une forte accélération lors de son éjection.

On fixe sur la monture 7, au milieu de sa partie supérieure, un crochet de verrouillage 17 coopérant avec une rampe d'encliquetage 18 formée sur la pièce 3. Le crochet 17 comporte une tige cylindrique 19 fixée sur le corps 20 d'un bouton-poussoir, qui se déplace longitudinalement dans un étui à ressort 21, cet étui étant fixé à la monture 7, de façon que le corps du bouton-poussoir 20 se déplace parallèlement aux axes 8A, 9A. La tige 19 est fixée sur le corps 20, perpendiculairement à la direction de déplacement de ce corps dans l'étui 21. En position de repos du corps 20 (visière relevée, pas d'appui sur le bouton), celui-ci fait saillie au maximum de son étui, vers la droite en figure 2 (sur cette figure, la surface 20A du corps 20 sur laquelle appuie l'utilisateur est à la droite de ce corps).

La rampe 18 avec laquelle coopère la tige 19 se présente comme un couloir disposé sur la fin du trajet de fermeture de la tige 19. Le fond de ce couloir est suffisamment éloigné de l'extrémité de la tige 19, lorsqu'elle est au droit de ce fond, pour ne pas gêner son déplacement. L'une des parois latérales de ce couloir, référencée 22 (paroi de gauche en figure 2) est plane et parallèle au trajet 19A de l'axe de la tige 19 à l'extérieur de ce couloir. Cette paroi 22 sert de butée pour la tige 19 lorsque le corps 20 est enfoncé au maximum dans son étui 21 pour désencliqueter la visière). La paroi latérale opposée 23 dudit couloir, perpendiculaire au fond de ce couloir, forme surface de came pour la tige 19, dont le début 24 la pousse vers la gauche en figure 2 de façon à enfoncer le corps 20 dans l'étui 21 jusqu'au franchissement d'un "pic" 25 après lequel cette tige 19 est brusquement relâchée, et sous l'effet du ressort interne du bouton-poussoir, revient pratiquement en position de repos, alignée sur l'axe 19A, en étant retenue par la dernière partie 26 de la paroi 23, qui est perpendiculaire à l'axe 19A. Pour déverrouiller la visière et la relever, il suffit d'appuyer à fond sur la face 20A du bouton-poussoir afin de dégager la tige 19 de la paroi 26, et de tirer la visière vers le haut jusqu'à l'enclenchement des billes des poussoirs 12, 13 dans leurs logements 15.

La plaque 3 comporte également, près du bord antérieur de sa face supérieure, deux bornes en saillie 27, disposées symétriquement par rapport à l'axe 27A de la plaque 3, et entre lesquelles vient s'insérer en position baissée de la visière, un plot (non représenté) de forme correspondant à l'espace entre ces deux bornes, afin de bloquer latéralement la visière en position baissée.

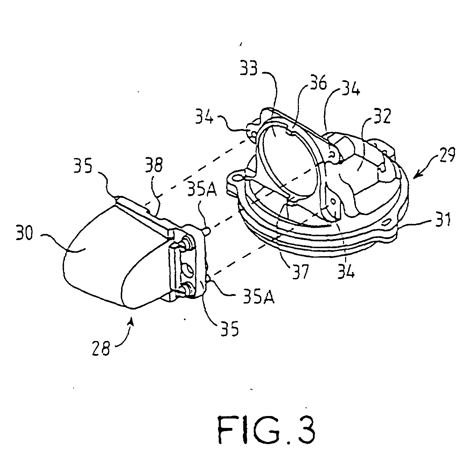

Le combineur 28, représenté sur les figures 3 à 5, est disposé devant l'oculaire 29 du dispositif de vision nocturne. Lorsque ce dispositif de vision nocturne est une jumelle, il comporte, bien entendu, deux tels combineurs.

L'oculaire 29 comprend une bague 31, destinée à être fixée sur le dispositif de vision nocturne, et une optique 32 de renvoi à 90°, telle qu'un prisme à faces d'entrée et de sortie perpendiculaires entre elles. La face 33 de l'optique 32, sur laquelle est fixé le combineur 30, est par exemple circulaire et comprend à sa périphérie des oreilles 34 permettant la fixation du combineur. Les surfaces d'appui de ces oreilles sont rectifiées de façon à servir de plan de référence pour le positionnement du combineur 30. Ce combineur comporte des pattes de fixation 35 venant s'appuyer sur les surfaces d'appui des oreilles 34 pour y être fixées, par exemple par vissage. Bien entendu, les surfaces d'appui des pattes 35 sont également rectifiées.

L'optique 32 comporte également à la périphérie de la face 33 un dispositif d'arrêt en rotation du combineur 30 (rotation par rapport à l'axe optique de la face 33). Comme représenté sur le dessin, ce dispositif d'arrêt en rotation peut par exemple comporter deux ergots 36, 37 diamétralement opposés, coopérant avec des encoches correspondantes formées sur la face en regard du combineur 30. Seule l'encoche 38, correspondant à l'ergot 36, est visible sur le dessin. Bien entendu, les faces latérales des ergots 36, 37 et les faces correspondantes des encoches du combineur 30 sont rectifiées afin de servir de faces de référencé pour le réglage en rotation du combineur 30, les trous pratiqués dans les pattes 35 pour le passage des vis de fixation 35A du combineur étant suffisamment grands pour permettre ce réglage en rotation.

Ainsi, on peut facilement interchanger différents combineurs en assurant leur parfait positionnement optique par rapport à l'optique 32 (qui est fixée à demeure sur le dispositif de vision nocturne).

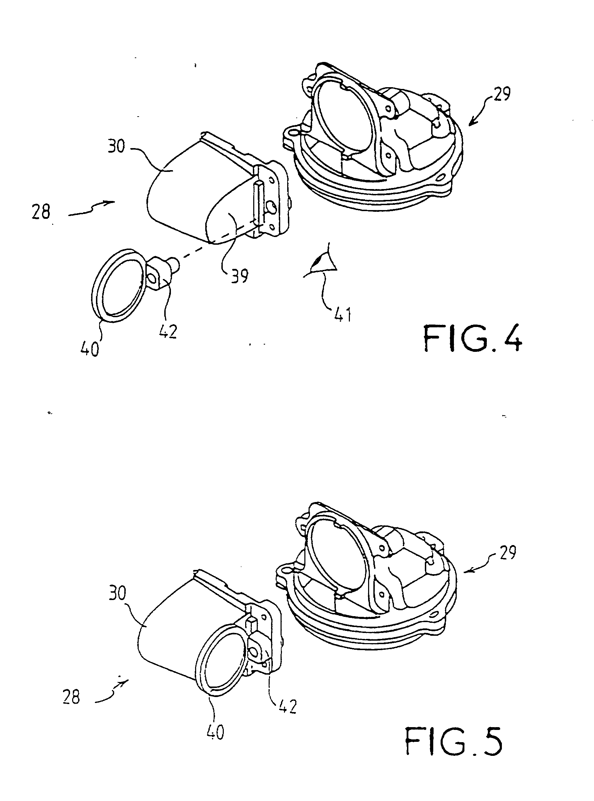

Comme représenté en figures 4 et 5, on fixe devant la face 39 du combineur 30 une lentille d'adaptation 40, la face 39 étant celle qui est directement vue par l'utilisateur 41. La lentille 40 est fixée de façon amovible, afin de pouvoir être facilement interchangeable pour permettre d'adapter le combineur à différents utilisateurs. Comme représenté sur le dessin, la lentille 40 peut comporter une patte 42 que l'on visse sur la patte 35 du combineur 30. Bien entendu, tout autre dispositif de fixation de la lentille 40 peut être approprié (clipsage par exemple).

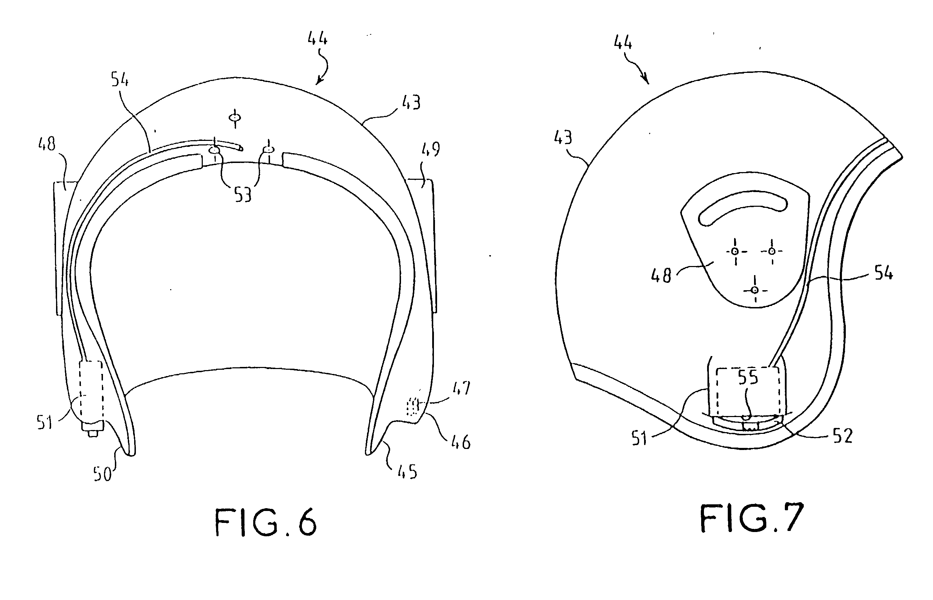

On n'a représenté sur les figures 6 et 7 que la coque externe du casque de l'invention, avec les éléments de l'invention, qui sont intégrés à ce casque.

La coque externe 43 du casque 44 de l'invention est réalisée selon le même procédé que les coques externes des casques connus, à savoir, en général, par moulage d'une matière thermo-fusible avec adjonction de matériaux de renforcement (fibres de verre, ...).

La coque 43 comporte, près du bord inférieur 45 de l'un de ses côtés, par exemple le côté gauche 46, un connecteur audiophonique 47 permettant de relier aux équipements amplificateurs audio de l'avion dans lequel est utilisé le casque 44 le(s) microphone(s), capteur(s) et haut-parleur(s) du casque. On a représenté sur le dessin les supports d'articulation 48, 49 de la visière du casque (non représentée).

Dans le bord inférieur gauche 50 du casque 44, on moule le logement 51 pour le boîtier amovible 52 des piles (non représentées) alimentant l'intensificateur de lumière (non représenté) du dispositif de vision nocturne fixé à la coque 43 en des points de fixation 53 situés à la partie supérieure du casque, près de son bord frontal. On a représenté sur le dessin le fil d'alimentation 54 reliant électriquement les piles au dispositif de vision nocturne, ce fil étant fixé sur la face intérieure de la coque 43, des moyens de connexion appropriés étant prévus aux extrémités du fil 54. Le logement 51, de forme correspondant à celle du boîtier 52 qu'il renferme, a son ouverture 55 dirigée vers le bas, cette ouverture permettant l'introduction du boîtier 52.

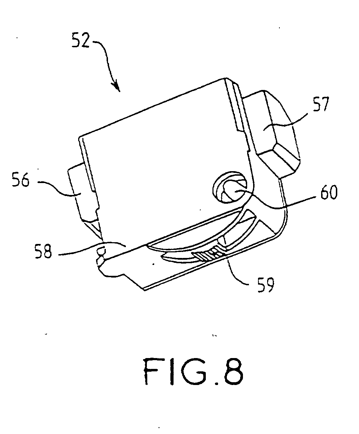

Le boîtier 52 (figure 8) a par exemple une forme générale de parallélépipède rectangle, comportant sur deux de ses côtés des ergots 56, 57 de fixation par encliquetage dans le logement 51. Des moyens (non représentés) sont prévus dans le logement 51 pour désencliqueter le boîtier pour pouvoir le sortir de son logement. La partie inférieure 58 du boîtier 52 fait légèrement saillie du logement 51 et comporte un interrupteur 59, facilement accessible par l'utilisateur lorsque le boîtier 52 est en place dans son logement. Cet interrupteur 59 est avantageusement du type à trois positions : coupure de l'alimentation, mise en service des piles et test des piles. Le test des piles est avantageusement mis en oeuvre de façon connue en soi grâce à un dispositif d'affichage tel qu'une diode électroluminescente 60 fixée près de la partie inférieure 58 du boîtier 52, de façon à être facilement visible par l'utilisateur.

Ainsi, grâce à l'invention, on obtient un bon équilibre du casque (la disposition du boîtier 52 à la partie inférieure du casque et la fixation du dispositif de vision nocturne à sa partie supérieure permettent de placer son centre de gravité plus près de son centre géométrique que dans les casques connus), une grande facilité de remplacement des piles, un bon accès à l'interrupteur de mise en service des piles et de test de celles-ci, et une visualisation aisée de ce test.

## Revendications

1. Casque à dispositif de vision nocturne comportant une visière teintée rabattable (5), un dispositif de vision nocturne ainsi qu'un combineur interchangeable (30), et un dispositif d'alimentation électrique pour le dispositif de vision nocturne, intégré au casque, la visière teintée coopérant avec des moyens de blocage en position relevée (12, 13, 15) et des moyens de verrouillage en position fermée (19, 23), **caractérisé en ce qu'**il comporte des moyens de rappel en position fermée (16) de la visière teintée, cette visière étant relevée en vision nocturne et étant rabattue manuellement en vision diurne et automatiquement en cas d'éjection du pilote, ces moyens de rappel en position fermée de la visière comportant au moins un ressort (16) dont la force est inférieure à celle nécessaire pour vaincre les moyens de blocage en position relevée.

2. Casque selon la revendication 1, **caractérisé en ce que** les moyens de blocage de la visière en position relevée comportent au moins un poussoir à bille (12, 13) et un logement correspondant (15) pour la bille du poussoir.

3. Casque selon la revendication 1 ou 2, **caractérisé en ce que** les moyens de maintien en position fermée de la visière comportent un crochet encliquetable (19, 23).

4. Casque selon la revendication 3, **caractérisé en ce que** la rampe d'encliquetage (23) du crochet encliquetable est formée sur le support (3) de la lunette de vision nocturne.

5. Casque selon l'une des revendications précédentes, **caractérisé en ce que** le combineur (30) est fixé sur un bloc optique (32) à l'aide de moyens présentant un plan de référence (34, 35) et une référence en rotation (36, 37, 38).

6. Casque selon la revendication 5, **caractérisé en ce qu'**il comporte devant le combineur une lentille (40) d'adaptation dioptrique amovible.

7. Dispositif selon l'une des revendications précédentes, **caractérisé par le fait que** le dispositif d'alimentation électrique est disposé dans un boîtier renferment des piles, et que ce boîtier est intégré à la partie inférieure (46) de la coque externe (43) du casque.

8. Dispositif selon la revendication 7, **caractérisé par le fait que** le boîtier est intégré dans le côté opposé au connecteur audiophonique (47) du casque.

9. Dispositif selon l'une des revendications 7 ou 8, **caractérisé par le fait que** le boîtier est encliqueté dans un logement (51) formé dans la coque externe (43) du casque.

10. Dispositif selon l'une des revendications 7 à 9, **caractérisé par le fait que** le boîtier comporte un interrupteur de mise en service (59) des piles du boîtier.

11. Dispositif selon la revendication 10, **caractérisé par le fait que** l'interrupteur comporte une position de test des piles.

12. Dispositif selon la revendication 11, **caractérisé par le fait que** le boîtier comporte un dispositif de visualisation (60) de l'état des piles.

## Patentansprüche

1. Helm mit einem Nachtsichtgerät und mit einer getönten schwenkbaren Visierscheibe (5), mit einem austauschbaren Kombinierorgan (30) und einer in den Helm integrierten Vorrichtung zur elektrischen Stromversorgung des Nachtsichtgeräts, wobei die getönte Visierscheibe mit Mitteln (12, 13, 15) zur Blockierung in der hochgeschobenen Stellung und mit Mitteln (19, 23) zur Verriegelung in der geschlossenen Stellung zusammenwirkt, **dadurch gekennzeichnet, daß** er Mittel (16) aufweist, die die getönte Visierscheibe in die geschlossene Stellung drücken, wobei die Visierscheibe beim nächtlichen Einsatz hochgeschoben ist und für einen Einsatz tagsüber von Hand nach unten geschoben sowie bei Auslösung des Piloten-Schleudersitzes automatisch nach unten gelangt, und daß die Mittel zum Drücken der Visierscheibe in die geschlossene Stellung mindestens eine Feder (16) aufweisen, deren Kraft geringer als die ist, die zum Überwinden der Blockiermittel in der hochgeschobenen Stellung erforderlich ist.

2. Helm nach Anspruch 1, **dadurch gekennzeichnet, daß** die Mittel zum Blockieren der Visierscheibe in der hochgeschobenen Stellung mindestens eine Rastkugel (12, 13) und eine entsprechende Vertiefung (15) für diese Kugel besitzt.

3. Helm nach Anspruch 1 oder 2, **dadurch gekennzeichnet, daß** die Mittel, die die Visierscheibe in der geschlossenen Stellung halten, ein Rastorgan (19, 23) aufweisen.

4. Helm nach Anspruch 3, **dadurch gekennzeichnet, daß** die Rastrampe (23) des Rastorgans am Träger (3) für das Nachtsichtgerät ausgebildet ist.

5. Helm nach einem der vorstehenden Ansprüche **dadurch gekennzeichnet, daß** das Kombinierorgan (30) auf einem optischen Block (32) mithilfe von Mitteln befestigt ist, die eine Bezugsebene (34, 35) und eine Bezugsdrehstellung (36, 37, 38) besitzen.

6. Helm nach Anspruch 5, **dadurch gekennzeichnet, daß** er vor dem Kombinierorgan eine abnehmbare Linse (40) zur dioptrischen Korrektur aufweist.

7. Vorrichtung nach einem der vorstehenden Ansprüche, **dadurch gekennzeichnet, daß** die elektrische Stromversorgungsvorrichtung in einem Batterien enthaltenden Gehäuse un- tergebracht ist und daß dieses Gehäuse in den unteren Bereich (46) der äußeren Schale (43) des Helms integriert ist.

8. Vorrichtung nach Anspruch 7, **dadurch gekennzeichnet, daß** das Gehäuse in die Seite integriert ist, die dem Audioanschluß (47) des Helms gegenüberliegt.

9. Vorrichtung nach einem der Ansprüche 7 und 8, **dadurch gekennzeichnet, daß** das Gehäuse in einem Raum (51) einrastet, der in der äußeren Schale (43) des Helms ausgebildet ist.

10. Vorrichtung nach einem der Ansprüche 7 bis 9, **dadurch gekennzeichnet, daß** das Gehäuse einen Schalter (59) zum Einschalten der Batterien in dem Gehäuse enthält.

11. Vorrichtung nach Anspruch 10, **dadurch gekennzeichnet, daß** der Schalter eine Schaltstellung zum Testen der Batterien enthält.

12. Vorrichtung nach Anspruch 11, **dadurch gekennzeichnet, daß** das Gehäuse eine Vorrichtung (60) zur Anzeige des Zustands der Batterien enthält.

## Claims

1. Helmet with night vision device comprising a fold-down tinted visor (5), a night vision device as well as an interchangeable combiner (30) and an electrical supply device for the night vision device, incorporated in the helmet, the tinted visor cooperating with means for locking in the raised position (12, 13, 15) and means for latching in the closed position (19, 23), **characterized in that** it comprises means for returning the tinted visor to the closed position (16), this visor being raised during night vision and being folded down manually during daytime vision and automatically in the event of pilot ejection, these means for restoring the visor to the closed position comprising at least one spring (16) whose force is less than that required to overcome the means for locking in the raised position.

2. Helmet according to Claim 1, **characterized in that** the means for locking the visor in the raised position comprise at least one ball pusher (12, 13) and a corresponding housing (15) for the ball of the pusher.

3. Helmet according to Claim 1 or 2, **characterized in that** the means for retaining the visor in the closed position comprise a click-fit catch (19, 23).

4. Helmet according to Claim 3, **characterized in that** the click-fit ramp (23) of the click-fit catch is formed on the support (3) of the night vision sight.

5. Helmet according to one of the preceding claims, **characterized in that** the combiner (30) is fixed on an optical block (32) with the aid of means exhibiting a reference plane (34, 35) and a rotational reference (36, 37, 38).

6. Helmet according to Claim 5, **characterized in that** in front of the combiner it comprises a removable dioptric adaptation lens (40).

7. Device according to one of the preceding claims, **characterized in that** the electrical supply device is disposed in a pack enclosing batteries, and that this pack is incorporated in the lower part (46) of the external shell (43) of the helmet.

8. Device according to Claim 7, **characterized in that** the pack is incorporated in the side opposite the audiophonic connector (47) of the helmet.

9. Device according to either of Claims 7 and 8, **characterized in that** the pack is click-fitted into a housing (51) formed in the external shell (43) of the helmet.

10. Device according to one of Claims 7 to 9, **characterized in that** the pack comprises a switch (59) for operating the batteries of the pack.

11. Device according to Claim 10, **characterized in that** the switch comprises a battery test position.

12. Device according to Claim 11, **characterized in that** the pack comprises a device (60) for displaying the status of the batteries.
